(19) Europäisches Patentamt
European Patent Office
Office européen des brevets

(11) **EP 2 749 967 A1**

(12) **EUROPEAN PATENT APPLICATION**
published in accordance with Art. 153(4) EPC

(43) Date of publication:
**02.07.2014 Bulletin 2014/27**

(51) Int Cl.:
**G04G 5/00** *(2013.01)* **H04L 7/00** *(2006.01)*

(21) Application number: **12838618.2**

(22) Date of filing: **27.09.2012**

(86) International application number:
**PCT/JP2012/074834**

(87) International publication number:
**WO 2013/051447 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2011 JP 2011221471**

(71) Applicant: **Sony Corporation Tokyo 108-0075 (JP)**

(72) Inventors:
• **SOMEYA Ikuo**
**Minato-ku, Tokyo 108-0075 (JP)**
• **HAMAMATSU Toshihiko**
**Minato-ku, Tokyo 108-0075 (JP)**
• **KOJIMA Toshiaki**
**Minato-ku, Tokyo 108-0075 (JP)**

(74) Representative: **Jackson, Jonathan Andrew**
**D Young & Co LLP**
**120 Holborn**
**London EC1N 2DY (GB)**

(54) **TIME CONTROL DEVICE, TIME CONTROL METHOD, AND PROGRAM**

(57) The present disclosure relates to a time control device, a time control method, and a program that can synchronize time information with a master device in a network with high precision.

The time control device as one aspect of the present disclosure includes: a first calculating unit that calculates a first time difference based on the transmission times and the reception times of messages exchanged with the master device, the first time difference indicating a difference between time information about the master device and time information about the slave device; a second calculating unit that calculates a second time difference based on the transmission time and the reception time of the message transmitted from the master device to the slave device; a third calculating unit that calculates a third time difference based on the transmission time and the reception time of the message transmitted from the slave device to the master device; and an adjusting unit that adjusts the time information about the slave device in accordance with a feedback control value generated based on a selected one of the first through third time differences. The present disclosure can be applied to a PTP slave, for example.

*FIG. 3*

EP 2 749 967 A1

**Description**

TECHNICAL FIELD

The present disclosure relates to time control devices, time control methods, and programs, and more particularly, to a time control device, a time control method, and a program that are suitably used for synchronizing time information with a master device in a network with high precision.

BACKGROUND ART

There have been mechanisms for synchronizing time information between devices connected to each other via a network, and one of the known examples of such mechanisms is IEEE1588 PTP (precision time protocol) (see Patent Document 1, for example).

According to IEEE1588 PTP, PTP messages are exchanged between a master device (hereinafter referred to as the PTP master) and a slave device (hereinafter referred to as the PTP slave) connected to each other via a network, so that time information T2 about the PTP slave can be synchronized with time information T1 about the PTP master with high precision on the order of submicroseconds. Specifically, an oscillation frequency F2 in the PTP slave can be synchronized with an oscillation frequency F1 in the PTP master, and after that, the time information T2 can be synchronized with the time information T1.

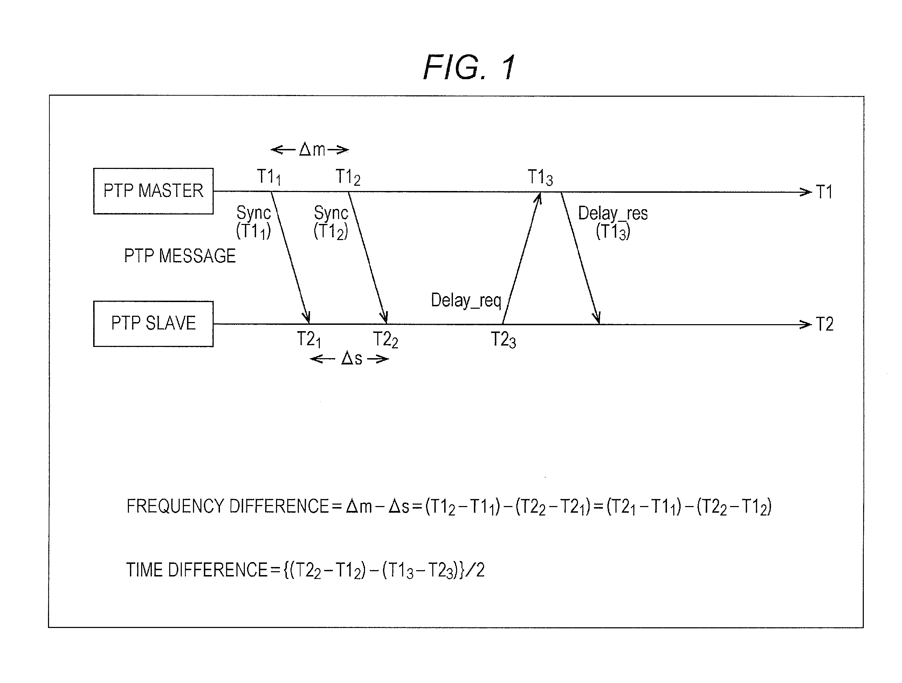

Fig. 1 shows an outline of a conventional high-precision time synchronization process using IEEE1588 PTP.

The PTP master is designed to transmit a Sync message as a PTP message containing a time stamp indicating a transmission time $T1_i$ over a network at predetermined intervals $\Delta m$ based on the oscillation frequency F1. Meanwhile, the PTP slave is designed to receive the Sync message transmitted from the PTP master, extract the time stamp indicating the transmission time $T1_i$ contained therein, and acquire the reception time $T2_i$ thereof. That is, the PTP slave obtains a transmission time $T1_i$ and a reception time $T2_i$ every time receiving a Sync packet.

The PTP slave is also designed to transmit a Delay_req as a PTP message to the PTP master via a network, and store the transmission time $T2_x$ thereof. Having received the Delay_req, the PTP master returns a Delay_res as a PTP message containing a time stamp indicating the reception time $T1_x$ to the PTP slave. That is, the PTP slave obtains the transmission time $T2_x$ and the reception time $T1_x$ of the Delay_req by transmitting the Delay_req and receiving the Delay_res returned from the PTP master in response to the Delay_req.

The time required to perform a one-way communication of a PTP message such as a Sync message, a Delay_req, or a Delay_res via a network will be hereinafter referred to as the network delay, and it is assumed that the network delay does not vary but is constant.

In this case, if the oscillation frequency F2 of the PTP slave is perfectly synchronized with the oscillation frequency F1 of the PTP master, the Sync message transmission intervals $\Delta m = T1_2 - T1_1$ in the PTP master are the same as the Sync message reception intervals $\Delta s = T2_2 - T2_1$ in the PTP slave. In other words, in a case where the difference $\Delta m - \Delta s$ between $\Delta m$ and $\Delta s$ is not 0, the oscillation frequency F2 of the PTP slave differs from the oscillation frequency F1 of the PTP master, and synchronization is not established.

Therefore, to establish frequency synchronization, the oscillation frequency F2 of the PTP slave should be adjusted so that the difference $\Delta m - \Delta s$ between $\Delta m$ and $\Delta s$ will become 0. Hereinafter, the difference $\Delta m - \Delta s$ between $\Delta m$ and $\Delta s$ will be referred to as the frequency difference. The frequency difference is calculated according to the following equation (1).

$$\text{Frequency difference } \Delta m - \Delta s = (T1_2 - T1_1) - (T2_2 - T2_1) = (T2_1 - T1_1) - (T2_2 - T1_2) \ \dots \ (1)$$

To establish time synchronization, the PTP slave transmits a Delay_req after frequency synchronization is established as described above, and receives a Delay_res as a response, to obtain the transmission time $T2_3$ and the reception time $T1_3$ of the Delay_req.

Where the difference between the time information T1 about the PTP master and the time information T2 about the PTP slave is referred to as the time difference as will be hereinafter, the equations (2) and (3) shown below are satisfied, and the equation (4) also shown below is determined from the equations (2) and (3).

$$\text{Reception time } T2_2 - \text{transmission time } T1_2 =$$
$$\text{network delay + time difference } \ldots (2)$$

$$\text{Reception time } T1_3 - \text{transmission time } T2_3 =$$
$$\text{network delay - time difference } \ldots (3)$$

$$\text{Time difference} = \{(T2_2 - T1_3) - (T1_2 - T2_3)\}/2 \ldots$$
$$(4)$$

In the PTP slave, the time information T2 should be adjusted so that the time difference expressed by the equation (4) will be 0.

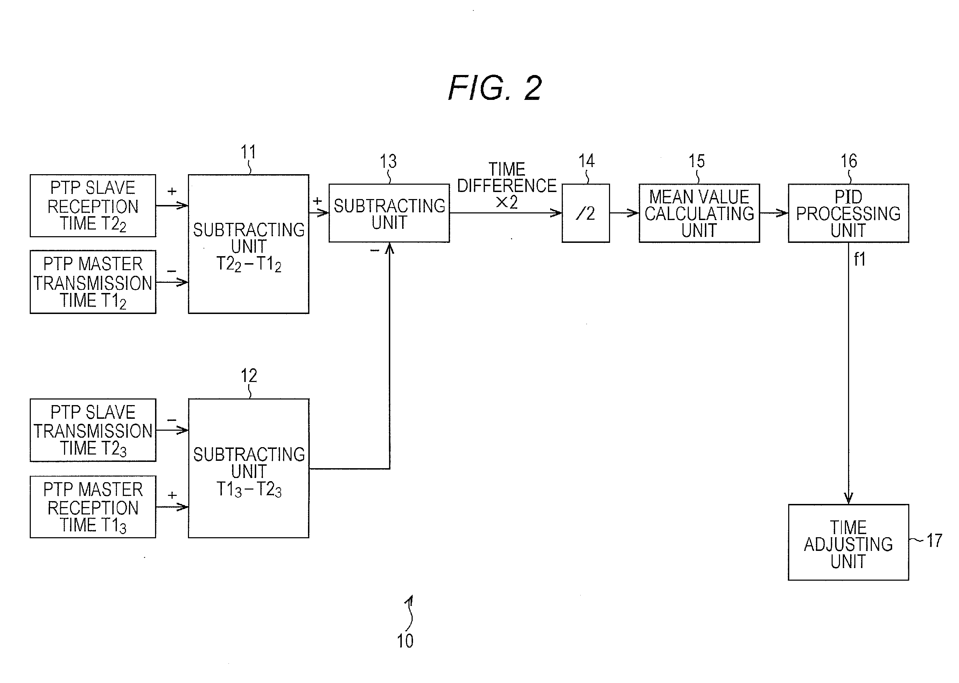

Fig. 2 shows an example structure of a time control device for establishing time synchronization in the PTP slave.

This time control device 10 includes subtracting units 11, 12, and 13, a dividing unit 14, a mean value calculating unit 15, a PID (proportional integral differential) processing unit 16, and a time adjusting unit 17.

The subtracting unit 11 calculates the reception time $T2_2$ - the transmission time $T1_2$ as shown in the above equation (2), and outputs the result to the subtracting unit 13. The subtracting unit 12 calculates the reception time $T2_3$ - the transmission time $T1_3$ as shown in the above equation (3), and outputs the result to the subtracting unit 13. The subtracting unit 13 and the dividing unit 14 calculate the time difference expressed by the above equation (4), and outputs the result to the mean value calculating unit 15.

The mean value calculating unit 15 sequentially stores a predetermined number of time differences that are input form the dividing unit 14 in the previous stage. Every time a time difference is input from the dividing unit 14, the mean value among the input time difference and the predetermined number of stored time differences is calculated and is output to the PID processing unit 16.

The PID processing unit 16 receives an input of the mean time difference from the mean value calculating unit 15, calculates a feedback control value f1 for performing PID control on the time adjusting unit 17 in a later stage, and outputs the calculation result to the time adjusting unit 17. The time adjusting unit 17 adjusts the time information T2 based on the feedback control value f1.

CITATION LIST

PATENT DOCUMENT

Patent Document 1: JP 2010-190635 A

SUMMARY OF THE INVENTION

PROBLEMS TO BE SOLVED BY THE INVENTION

When high-capacity packets such as video signals flow in the network to which the PTP master and the PTP slave are connected, a congestion occurs in the network, and the network delay of the above described PTP messages might temporarily become longer.

In such a case, the above described assumption that "the network delay of the PTP messages does not vary but is constant" is not satisfied. Therefore, frequency synchronization and time synchronization cannot be accurately established by the above described method.

The present disclosure is made in view of those circumstances, and aims to synchronize time information with a master device in a network with high precision.

SOLUTIONS TO PROBLEMS

A time control device as one aspect of the present disclosure is a time control device that is installed in a slave device, and synchronizes time information with a master device to which the slave device is connected via a network. The time control device includes: a first calculating unit that calculates a first time difference based on the transmission times and the reception times of messages exchanged with the master device, the first time difference indicating a difference between time information about the master device and time information about the slave device; a second calculating unit that calculates a second time difference based on the transmission time and the reception time of the message transmitted from the master device to the slave device, the second time difference indicating a difference between the time information about the master device and the time information about the slave device; a third calculating unit that calculates a third time difference based on the transmission time and the reception time of the message transmitted from the slave device to the master device, the third time difference indicating a difference between the time information about the master device and the time information about the slave device; a selecting unit that selects one of the calculated first through third time differences; a feedback control value generating unit that generates a feedback control value based on the selected time difference, the feedback control value being used for performing feedback control on the time information about the slave device; and an adjusting unit that adjusts the time information about the slave device in accordance with the generated feedback control value.

The first calculating means may further calculate a network delay based on the transmission times and the reception times of the messages exchanged with the master device, the network delay indicating the period of time required for communicating the messages via the network, and the selecting unit selects one of the first through third time differences based on the network delay.

When the network delay is smaller than a first threshold value, the selecting unit may select the first time difference, and, when the network delay is equal to or greater than the first threshold value, the selecting unit may select the second time difference or the third threshold value, whichever has the smaller absolute value.

When the network delay is smaller than a first threshold value, the selecting unit may select the first time difference. When the network delay is equal to or greater than the first threshold value, the selecting unit may select the second time difference or the third threshold value, whichever has the smaller absolute value, and, when the absolute value of the selected second time difference or third threshold value is smaller than a second threshold value, the selecting unit may notify the feedback control value generating unit of a time difference 0.

The time control device as the one aspect of the present disclosure may further include a storing unit that stores the minimum value of the network delay, the minimum value being smaller than the first threshold value. The second calculating unit may calculate the second time difference based on the stored minimum value of the network delay and the transmission time and the reception time of the message transmitted from the master device to the slave device, the second time difference indicating a difference between the time information about the master device and the time information about the slave device. The third calculating unit may calculate the third time difference based on the stored minimum value of the network delay and the transmission time and the reception time of the message transmitted from the slave device to the master device, the third time difference indicating a difference between the time information about the master device and the time information about the slave device.

A time control method as one aspect of the present disclosure is a time control method implemented in a time control device that is installed in a slave device, and synchronizes time information with a master device to which the slave device is connected via a network. The time control method includes: a first calculating step of calculating a first time difference based on the transmission times and the reception times of messages exchanged with the master device, the first time difference indicating a difference between time information about the master device and time information about the slave device; a second calculating step of calculating a second time difference based on the transmission time and the reception time of the message transmitted from the master device to the slave device, the second time difference indicating a difference between the time information about the master device and the time information about the slave device; a third calculating step of calculating a third time difference based on the transmission time and the reception time of the message transmitted from the slave device to the master device, the third time difference indicating a difference between the time information about the master device and the time information about the slave device; a selecting step of selecting one of the calculated first through third time differences; a PID processing step of generating a feedback control value based on the selected time difference, the feedback control value being used for performing feedback control on the time information about the slave device; and an adjusting step of adjusting the time information about the slave device in accordance with the generated feedback control value, the steps being carried out by the time control device.

A program as one aspect of the present disclosure is a program to be executed by a computer that is installed in a slave device, and synchronizes time information with a master device to which the slave device is connected via a network. The program causes the computer to function as: a first calculating unit that calculates a first time difference based on the transmission times and the reception times of messages exchanged with the master device, the first time difference indicating a difference between time information about the master device and time information about the slave device; a second calculating unit that calculates a second time difference based on the transmission time and the reception time of the message transmitted from the master device to the slave device, the second time difference indicating a difference between the time information about the master device and the time information about the slave device; a third calculating unit that calculates a third time difference based on the transmission time and the reception time of the message transmitted from the slave device to the master device, the third time difference indicating a difference between the time information about the master device and the time information about the slave device; a selecting unit that selects one of the calculated first through third time differences; a feedback control value generating unit that generates a feedback control value based on the selected time difference, the feedback control value being used for performing feedback control on the time information about the slave device; and an adjusting unit that adjusts the time information about the slave device in accordance with the generated feedback control value.

In one aspect of the present disclosure, a first time difference indicating a difference between the time information about the master device and the time information about the slave device is calculated based on the transmission times and the reception times of messages exchanged with the master device. A second time difference indicating a difference between the time information about the master device and the time information about the slave device is calculated based on the transmission time and the reception time of the message transmitted from the master device to the slave device. A third time difference indicating a difference between the time information about the master device and the time information about the slave device is calculated based on the transmission time and the reception time of the message transmitted from the slave device to the master device. One of the calculated first through third time differences is selected, a feedback control value for performing feedback control on the time information about the slave device is generated based on the selected time difference, and the time information about the slave device is adjusted in accordance with the generated feedback control value.

EFFECTS OF THE INVENTION

According to one aspect of the present disclosure, time information can be synchronized with a master device in a network with high precision.

BRIEF DESCRIPTION OF DRAWINGS

Fig. 1 is a diagram showing an outline of a conventional high-precision time synchronization process using IEEE1588 PTP.
Fig. 2 is a block diagram showing an example structure of a conventional time control device.
Fig. 3 is a diagram showing example states of network delays.
Fig. 4 is a block diagram showing an example structure of a time control device to which the present disclosure is applied.
Fig. 5 is a flowchart for explaining an operation of the time control device shown in Fig. 4.
Fig. 6 is a block diagram showing an example structure of a computer.

MODES FOR CARRYING OUT THE INVENTION

Situations where the assumption that "the network delay does not vary but is constant" is not satisfied and the network delay temporarily increases are now described below before the best mode for carrying out the present disclosure (hereinafter referred to as the embodiment) is described.

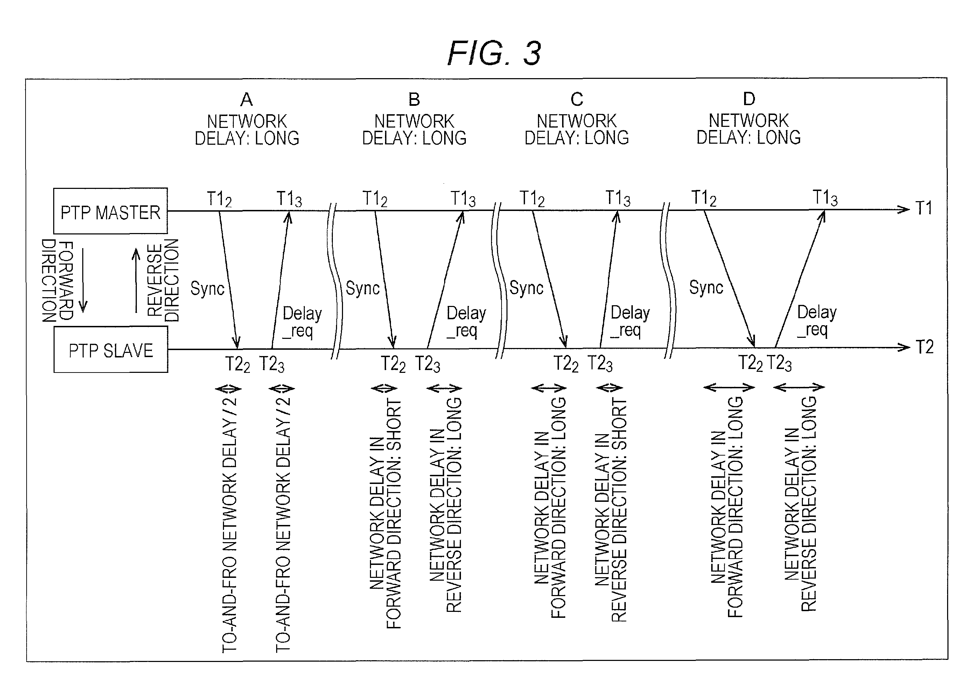

Fig. 3 shows four different states of network delays that are observed when a Sync message is transmitted from a PTP master to a PTP slave (hereinafter referred to as the forward direction), and a Delay_req is transmitted from the PTP slave to the PTP master (hereinafter referred to as the reverse direction).

In the drawing, A shows a case where the above described assumption is satisfied, or the network delay in the forward direction and the network delay in the reverse direction are the same. In this case, the network delay calculated based on the transmission times and the reception times of the PTP messages in the forward direction and the reverse direction has a true value, and is smaller than a predetermined first threshold value. In this case, the time difference calculated according to the above equation (4) is used in the embodiment of the present disclosure.

In the drawing, B through D show cases where the above described assumption is not satisfied.

B in the drawing shows a case where the network delay in the forward direction is shorter than the network delay in the reverse direction, and is also smaller than a predetermined second threshold value. In this case, the network delay calculated based on the transmission times and the reception times of the PTP messages in the forward direction and the reverse direction contains an error, and therefore, is greater than the predetermined first threshold value. In this case, it is considered that the network delay in the forward direction is less affected by a congestion in the network than the network delay in the reverse direction, and therefore, a time difference is calculated by using the transmission time and the reception time of the PTP message in the forward direction in the embodiment of the present disclosure.

C in the drawing shows a case where the network delay in the reverse direction is shorter than the network delay in the forward direction, and is also smaller than the predetermined second threshold value. In this case, the network delay calculated based on the transmission times and the reception times of the PTP messages in the forward direction and the reverse direction contains an error, and therefore, is greater than the predetermined first threshold value. In this case, it is considered that the network delay in the reverse direction is less affected by a congestion in the network than the network delay in the forward direction, and therefore, a time difference is calculated by using the transmission time and the reception time of the PTP message in the reverse direction in the embodiment of the present disclosure.

D in the drawing shows a case where the network delays in the forward direction and the reverse direction are greater than the predetermined second threshold value. In this case, the network delay calculated based on the transmission times and the reception times of the PTP messages in the forward direction and the reverse direction contains an error, and therefore, is greater than the predetermined first threshold value. In this case, it is considered that both of the network delays in the forward direction and the reverse direction are not affected by a congestion in the network, and therefore, a time difference 0 is set so as to perform no time adjustment in the embodiment of the present disclosure.

As described above, in conventional cases, a time difference is calculated by using the transmission times and the reception times of PTP messages, and a feedback control value f1 is generated based on the calculated time difference only in the situation A shown in the drawing. In the embodiment of the present disclosure, however, not only in the situation A but also in the situation B or C shown in the drawing, a time difference is calculated by using the transmission time and the reception time of a PTP message, and a feedback control value f1 is generated based on the calculated time difference. In this manner, time information is adjusted with high precision as promptly as possible, even when the assumption that "the network delay does not vary but is constant" is not satisfied.

[Example Structure of the Time Control Device]

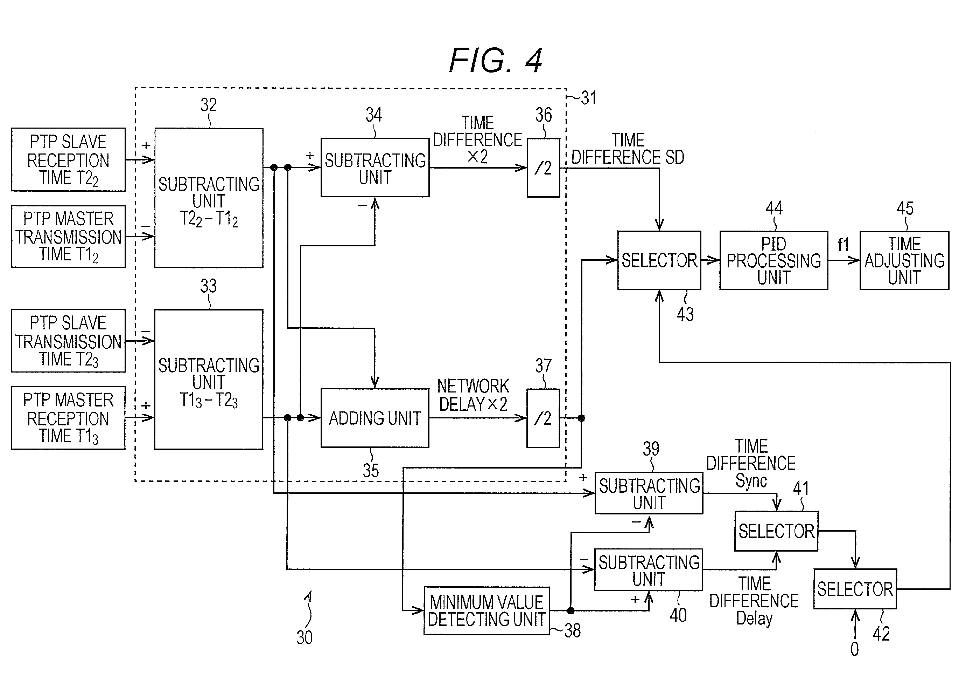

Fig. 4 shows an example structure of the time control device as an embodiment of the present disclosure. This time control device 30 includes a network delay/time difference calculating unit 31, a minimum value detecting unit 38, subtracting units 39 and 40, selectors 41 through 43, a PID processing unit 44, and a time adjusting unit 45.

The network delay/time difference calculating unit 31 includes subtracting units 32 through 34, an adding unit 35, and dividing units 36 and 37.

The subtracting unit 32 calculates the reception time $T2_2$ - the transmission time $T1_2$ of a Sync message as shown in the above equation (2), and outputs the result to the subtracting unit 34, the adding unit 35, and the subtracting unit 39. The subtracting unit 33 calculates the reception time $T1_3$ - the transmission time $T2_3$ of a Delay_req as shown in the above equation (3), and outputs the result to the subtracting unit 34, the adding unit 35, and the subtracting unit 40.

The subtracting unit 34 and the dividing unit 36 calculate a time difference according to the above equation (4), and output the time difference to the selector 43. The time difference calculated according to the equation (4) based on the transmission times and the reception times of the Sync message and the Delay_req will be hereinafter referred to as the time difference SD.

The adding unit 35 and the dividing unit 37 calculate a network delay as shown in the above equations (2) and (3), and output the network delay to the minimum value detecting unit 38 and the selector 43.

The minimum value detecting unit 38 constantly monitors the network delay that is input from the dividing unit 37 of the network delay/time difference calculating unit 31. When the value of the network delay is smaller than a predetermined first threshold value and is also smaller than the stored minimum value, the minimum value detecting unit 38 updates the stored minimum value with the value of the input network delay. The minimum value detecting unit 38 also outputs the stored minimum network delay value (the network delay min) to the subtracting units 39 and 40.

The subtracting unit 39 subtracts the network delay min from the reception time $T2_2$ - the transmission time $T1_2$ (= network delay + time difference), which is input from the subtracting unit 32. By doing so, the subtracting unit 39 calculates a time difference Sync based only on the transmission time and the reception time of the Sync message, and outputs the time difference Sync to the selector 41.

The subtracting unit 40 subtracts the reception time $T1_3$ - the transmission time $T2_3$ (= network delay - time difference), which is input from the subtracting unit 33, from the network delay min. By doing so, the subtracting unit 40 calculates a time difference Delay based only on the transmission time and the reception time of the Delay_req, and outputs the time difference Delay to the selector 41.

The selector 41 outputs the time difference Sync that is input from the subtracting unit 39 or the time difference Delay that is input from the subtracting unit 40, whichever has the smaller absolute value, to the selector 42.

The selector 42 determines whether the absolute value of the input (the time difference Sync or the time difference Delay) from the selector 41 is smaller than a predetermined second threshold value, and outputs the input to the selector 43 if the determination result is positive. If the determination result is negative, on the other hand, a time difference 0 is output to the selector 43.

The selector 43 determines whether the network delay that is input from the dividing unit 37 of the network delay/time difference calculating unit 31 is smaller than the predetermined first threshold value. If the determination result is positive, the time difference SD, which is input from the dividing unit 36 of the network delay/time difference calculating unit 31, is output to the PID processing unit 44. If the determination result is negative, on the other hand, the input (the time difference Sync, the time difference Delay, or the time difference 0) from the selector 42 is output to the PID processing unit 44.

The PID processing unit 44 calculates a feedback control value f1 for performing PID control on the time adjusting unit 45 in a later stage based on the input (the time difference Sync, the time difference Delay, or the time difference 0) from the selector 43, and outputs the feedback control value f1 to the time adjusting unit 45. The time adjusting unit 45 adjusts time information T2 about the slave device in accordance with the feedback control value f1.

[Description of Operation]

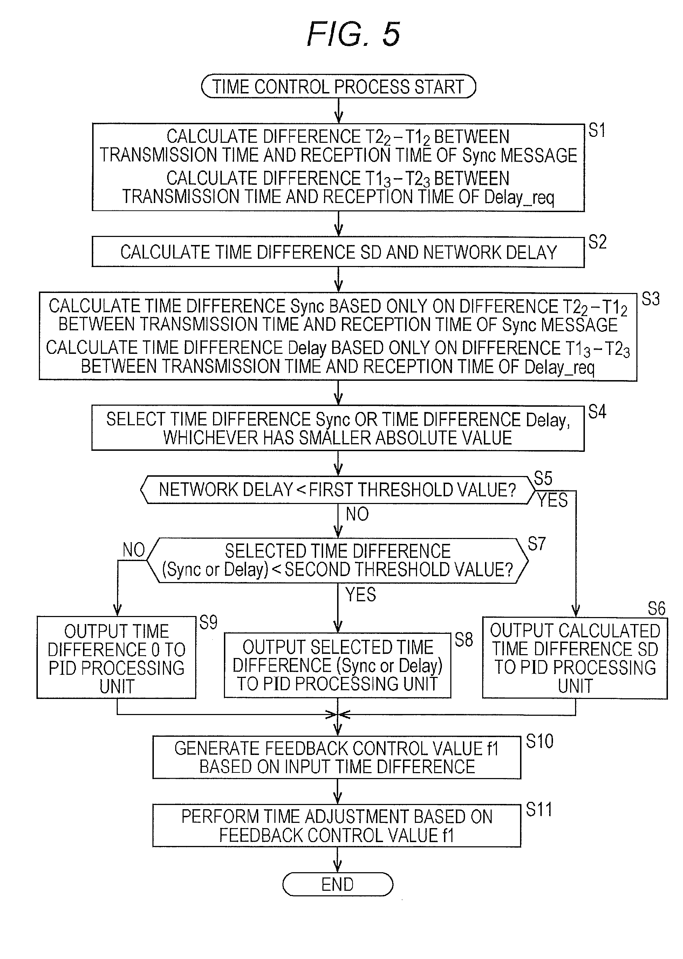

Next, an operation of the time control device 30 is described. Fig. 5 is a flowchart for explaining a time control process to be performed by the time control device 30.

This time control process is performed at regular intervals. In step S1, the subtracting unit 32 of the network delay/time difference calculating unit 31 calculates the reception time $T2_2$ - the transmission time $T1_2$ of a Sync message as shown in the above equation (2), and outputs the result to the subtracting unit 34, the adding unit 35, and the subtracting unit 39. Meanwhile, the subtracting unit 33 calculates the reception time $T1_3$ - the transmission time $T2_3$ of a Delay_req as shown in the above equation (3), and outputs the result to the subtracting unit 34, the adding unit 35, and the subtracting unit 40.

In step S2, the subtracting unit 34 and the dividing unit 36 of the network delay/time difference calculating unit 31 calculate the time difference SD according to the above equation (4), and output the time difference SD to the selectors 42 and 43. Meanwhile, the adding unit 35 and the dividing unit 37 calculate a network delay as shown in the above equations (2) and (3), and output the network delay to the minimum value detecting unit 38 and the selector 43.

In step S3, the subtracting unit 39 subtracts the network delay min, which is input from the minimum value detecting unit 38, from the reception time $T2_2$ - the transmission time $T1_2$ (= network delay + time difference), which is input from the subtracting unit 32. By doing so, the subtracting unit 39 calculates the time difference Sync based only on the transmission time and the reception time of the Sync message, and outputs the time difference Sync to the selector 41. Meanwhile, the subtracting unit 40 subtracts the reception time $T1_3$ - the transmission time $T2_3$ (= network delay - time difference), which is input from the subtracting unit 33, from the network delay min, which is input from the minimum value detecting unit 38. By doing so, the subtracting unit 40 calculates the time difference Delay based only on the transmission time and the reception time of the Delay_req, and outputs the time difference Delay to the selector 41.

In step S4, the selector 41 outputs the time difference Sync that has been input from the subtracting unit 39 or the time difference Delay that has been input from the subtracting unit 40, whichever has the smaller absolute value, to the selector 42.

In step S5, the selector 43 determines whether the network delay that has been input from the dividing unit 37 of the network delay/time difference calculating unit 31 is smaller than the predetermined first threshold value. If the determination result is positive, the process moves on to step S6, and the selector 43 outputs the time difference SD, which has been input from the dividing unit 36, to the PID processing unit 44. If the determination result is negative, on the other hand, the selector 43 outputs the input (the time difference Sync, the time difference Delay, or the time difference 0) from the selector 42 to the PID processing unit 44, and the process then moves on to step S7.

In step S7, the selector 42 determines whether the absolute value of the input (the time difference Sync or the time difference Delay) from the selector 41 is smaller than the predetermined second threshold value. If the determination result is positive, the process moves on to step S8, and the input from the selector 41 is output to the selector 43. Accordingly, the input (the time difference Sync or the time difference Delay) from the selector 41 is output from the selector 43 to the PID processing unit 44.

If the determination result in step S7 is negative, on the other hand, the process moves on to step S9, and the time difference 0 is output to the selector 43. Accordingly, the time difference 0 is output from the selector 43 to the PID processing unit 44.

In step S10, the PID processing unit 44 calculates the feedback control value f1 for performing PID control on the time adjusting unit 45 in a later stage based on the input (the time difference Sync, the time difference Delay, or the time difference 0) from the selector 43, and outputs the feedback control value f1 to the time adjusting unit 45. In step S11, the time adjusting unit 45 adjusts the time information T2 about the slave device in accordance with the feedback control value f1. The time control process then comes to an end.

As described above, in the time control process to be performed by the time control device 30, when the calculated network delay is smaller than the first threshold value (a case equivalent to A in Fig. 3), the feedback control value f1 is generated based on the time difference SD calculated based on the transmission times and the reception times of PTP messages.

In a case where the calculated network delay is greater than the first threshold value, and the absolute value of the time difference Sync calculated based on the transmission time and the reception time of a Sync message is smaller than the absolute value of the time difference Delay calculated based on the transmission time and the reception time of a Delay_req, and is also smaller than the second threshold value (a case equivalent to B in Fig. 3), the feedback control value f1 is generated based on the time difference Sync.

In a case where the calculated network delay is greater than the first threshold value, and the absolute value of the time difference Delay calculated based on the transmission time and the reception time of the Delay_req is smaller than the absolute value of the time difference Sync calculated based on the transmission time and the reception time of the Sync message, and is also smaller than the second threshold value (a case equivalent to C in Fig. 3), the feedback control value f1 is generated based on the time difference Delay.

Further, in a case where the calculated network delay is greater than the first threshold value, and the time difference Delay calculated based on the transmission time and the reception time of the Delay_req and the time difference Sync calculated based on the transmission time and the reception time of the Sync message are both equal to or greater than the second threshold value (a case equivalent to D in Fig. 3), the feedback control value f1 is generated based on the time difference 0.

As described above, even when the assumption that "the network delay does not vary but is constant" is not satisfied, the feedback control value f1 is generated. Accordingly, the time information T2 about the slave device can be adjusted with high precision as promptly as possible.

The above described series of processes by the time control device 30 can be performed with hardware or software. Where the series of processes are performed with software, the program that forms the software is installed into a computer. Here, the computer may be a computer incorporated into special-purpose hardware, or may be a general-purpose personal computer that can execute various kinds of functions as various kinds of programs are installed thereinto.

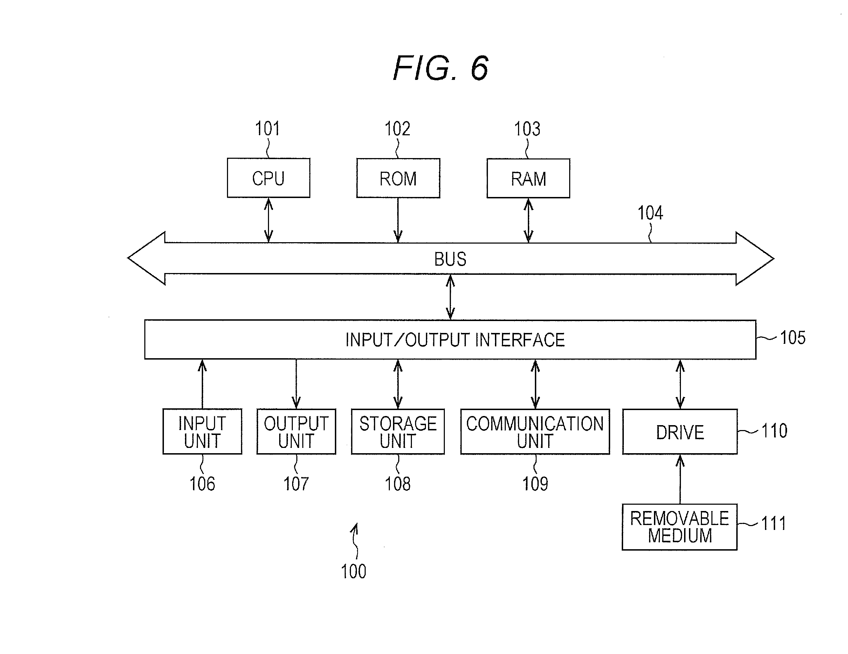

Fig. 6 is a block diagram showing an example structure of the hardware of a computer that performs the above described series of processes in accordance with a program.

In the computer, a CPU (Central Processing Unit) 101, a ROM (Read Only Memory) 102, and a RAM (Random Access Memory) 103 are connected to one another by a bus 104.

An input/output interface 105 is further connected to the bus 104. An input unit 106, an output unit 107, a storage unit 108, a communication unit 109, and a drive 110 are connected to the input/output interface 105.

The input unit 106 is formed with a keyboard, a mouse, a microphone, and the like. The output unit 107 is formed with a display, a speaker, and the like. The storage unit 108 is formed with a hard disk, a nonvolatile memory, or the like. The communication unit 109 is formed with a network interface or the like. The drive 110 drives a removable medium 111 such as a magnetic disk, an optical disk, a magnetooptical disk, or a semiconductor memory.

In the computer having the above described structure, the CPU 101 loads a program stored in the storage unit 108 into the RAM 103 via the input/output interface 105 and the bus 104, and executes the program, so that the above described series of processes are performed.

The program to be executed by the computer (the CPU 101) may be recorded on the removable medium 111 as a package medium to be provided, for example. Alternatively, the program can be provided via a wired or wireless transmission medium such as a local area network, the Internet, or digital satellite broadcasting.

In the computer, the program can be installed into the storage unit 108 via the input/output interface 105 when the removable medium 111 is mounted on the drive 110. The program can also be received by the communication unit 109 via a wired or wireless transmission medium, and be installed into the storage unit 108. Also, the program may be installed beforehand into the ROM 102 or the storage unit 108.

The program to be executed by the computer may be a program for performing processes in chronological order in accordance with the sequence described in this specification, or may be a program for performing processes in parallel or performing a process when necessary, such as when there is a call.

The embodiments of the present disclosure are not limited to the above described embodiments, and various changes may be made to them without departing from the scope of the present disclosure.

REFERENCE SIGNS LIST

30 Time control device, 31 Network delay/time difference calculating unit, 32-34, Subtracting units, 35 Adding unit, 36, 37 Dividing units, 38 Minimum value detecting unit, 39, 40 Subtracting units, 41-43 Selectors, 44 PID processing unit, 45 Time adjusting unit, 100 Computer, 101 CPU

Claims

1. A time control device that is installed in a slave device, and synchronizes time information with a master device to which the slave device is connected via a network,
   the time control device comprising:

   a first calculating unit configured to calculate a first time difference based on transmission times and reception times of messages exchanged with the master device, the first time difference indicating a difference between time information about the master device and time information about the slave device;
   a second calculating unit configured to calculate a second time difference based on the transmission time and the reception time of the message transmitted from the master device to the slave device, the second time difference indicating a difference between the time information about the master device and the time information about the slave device;
   a third calculating unit configured to calculate a third time difference based on the transmission time and the reception time of the message transmitted from the slave device to the master device, the third time difference indicating a difference between the time information about the master device and the time information about the slave device;
   a selecting unit configured to select one of the calculated first through third time differences;
   a feedback control value generating unit configured to generate a feedback control value based on the selected time difference, the feedback control value being used for performing feedback control on the time information about the slave device; and
   an adjusting unit configured to adjust the time information about the slave device in accordance with the generated feedback control value.

2. The time control device according to claim 1, wherein
   the first calculating means further calculates a network delay based on the transmission times and the reception times of the messages exchanged with the master device, the network delay indicating a period of time required for communicating the messages via the network, and
   the selecting unit selects one of the first through third time differences based on the network delay.

3. The time control device according to claim 2, wherein,
   when the network delay is smaller than a first threshold value, the selecting unit selects the first time difference, and, when the network delay is equal to or greater than the first threshold value, the selecting unit selects the second time difference or the third threshold value, whichever has the smaller absolute value.

4. The time control device according to claim 2, wherein,
   when the network delay is smaller than a first threshold value, the selecting unit selects the first time difference, and, when the network delay is equal to or greater than the first threshold value, the selecting unit selects the second time difference or the third threshold value, whichever has the smaller absolute value, and, when the absolute value of the selected second time difference or third threshold value is smaller than a second threshold value, the selecting unit notifies the feedback control value generating unit of a time difference 0.

5. The time control device according to claim 2, further comprising
   a storing unit configured to store a minimum value of the network delay, the minimum value being smaller than the first threshold value,
   wherein
   the second calculating unit calculates the second time difference based on the stored minimum value of the network delay and the transmission time and the reception time of the message transmitted from the master device to the slave device, the second time difference indicating a difference between the time information about the master device and the time information about the slave device, and
   the third calculating unit calculates the third time difference based on the stored minimum value of the network delay and the transmission time and the reception time of the message transmitted from the slave device to the master device, the third time difference indicating a difference between the time information about the master device and the time information about the slave device.

6. A time control method implemented in a time control device that is installed in a slave device, and synchronizes time information with a master device to which the slave device is connected via a network,
   the time control method comprising:

a first calculating step of calculating a first time difference based on transmission times and reception times of messages exchanged with the master device, the first time difference indicating a difference between time information about the master device and time information about the slave device;

a second calculating step of calculating a second time difference based on the transmission time and the reception time of the message transmitted from the master device to the slave device, the second time difference indicating a difference between the time information about the master device and the time information about the slave device;

a third calculating step of calculating a third time difference based on the transmission time and the reception time of the message transmitted from the slave device to the master device, the third time difference indicating a difference between the time information about the master device and the time information about the slave device;

a selecting step of selecting one of the calculated first through third time differences;

a PID processing step of generating a feedback control value based on the selected time difference, the feedback control value being used for performing feedback control on the time information about the slave device; and

an adjusting step of adjusting the time information about the slave device in accordance with the generated feedback control value,

the steps being carried out by the time control device.

7. A program to be executed by a computer that is installed in a slave device, and synchronizes time information with a master device to which the slave device is connected via a network,

the program causing the computer to function as:

a first calculating unit configured to calculate a first time difference based on transmission times and reception times of messages exchanged with the master device, the first time difference indicating a difference between time information about the master device and time information about the slave device;

a second calculating unit configured to calculate a second time difference based on the transmission time and the reception time of the message transmitted from the master device to the slave device, the second time difference indicating a difference between the time information about the master device and the time information about the slave device;

a third calculating unit configured to calculate a third time difference based on the transmission time and the reception time of the message transmitted from the slave device to the master device, the third time difference indicating a difference between the time information about the master device and the time information about the slave device;

a selecting unit configured to select one of the calculated first through third time differences;

a feedback control value generating unit configured to generate a feedback control value based on the selected time difference, the feedback control value being used for performing feedback control on the time information about the slave device; and

an adjusting unit configured to adjust the time information about the slave device in accordance with the generated feedback control value.

## FIG. 1

$$\text{FREQUENCY DIFFERENCE} = \Delta m - \Delta s = (T1_2 - T1_1) - (T2_2 - T2_1) = (T2_1 - T1_1) - (T2_2 - T1_2)$$

$$\text{TIME DIFFERENCE} = \{(T2_2 - T1_2) - (T1_3 - T2_3)\}/2$$

EP 2 749 967 A1

# FIG. 2

EP 2 749 967 A1

# FIG. 3

| A | B | C | D |
|---|---|---|---|
| NETWORK DELAY: LONG | NETWORK DELAY: LONG | NETWORK DELAY: LONG | NETWORK DELAY: LONG |

PTP MASTER

PTP SLAVE

FORWARD DIRECTION

REVERSE DIRECTION

$T1_2$  $T1_3$  $T1_2$  $T1_3$  $T1_2$  $T1_3$  $T1_2$  $T1_3$  T1

Sync  Delay_req  Sync  Delay_req  Sync  Delay_req  Sync  Delay_req

$T2_2$ $T2_3$  $T2_2$ $T2_3$  $T2_2$ $T2_3$  $T2_2$ $T2_3$  T2

TO-AND-FRO NETWORK DELAY / 2

TO-AND-FRO NETWORK DELAY / 2

NETWORK DELAY IN FORWARD DIRECTION: SHORT

NETWORK DELAY IN REVERSE DIRECTION: LONG

NETWORK DELAY IN FORWARD DIRECTION: LONG

NETWORK DELAY IN REVERSE DIRECTION: SHORT

NETWORK DELAY IN FORWARD DIRECTION: LONG

NETWORK DELAY IN REVERSE DIRECTION: LONG

EP 2 749 967 A1

FIG. 4

# FIG. 5

$$\text{( TIME CONTROL PROCESS START )}$$

**S1** — CALCULATE DIFFERENCE $T2_2 - T1_2$ BETWEEN TRANSMISSION TIME AND RECEPTION TIME OF Sync MESSAGE
CALCULATE DIFFERENCE $T1_3 - T2_3$ BETWEEN TRANSMISSION TIME AND RECEPTION TIME OF Delay_req

**S2** — CALCULATE TIME DIFFERENCE SD AND NETWORK DELAY

**S3** — CALCULATE TIME DIFFERENCE Sync BASED ONLY ON DIFFERENCE $T2_2 - T1_2$ BETWEEN TRANSMISSION TIME AND RECEPTION TIME OF Sync MESSAGE
CALCULATE TIME DIFFERENCE Delay BASED ONLY ON DIFFERENCE $T1_3 - T2_3$ BETWEEN TRANSMISSION TIME AND RECEPTION TIME OF Delay_req

**S4** — SELECT TIME DIFFERENCE Sync OR TIME DIFFERENCE Delay, WHICHEVER HAS SMALLER ABSOLUTE VALUE

**S5** — NETWORK DELAY < FIRST THRESHOLD VALUE?
NO / YES

**S7** — SELECTED TIME DIFFERENCE (Sync or Delay) < SECOND THRESHOLD VALUE?
NO / YES

**S9** — OUTPUT TIME DIFFERENCE 0 TO PID PROCESSING UNIT

**S8** — OUTPUT SELECTED TIME DIFFERENCE (Sync or Delay) TO PID PROCESSING UNIT

**S6** — OUTPUT CALCULATED TIME DIFFERENCE SD TO PID PROCESSING UNIT

**S10** — GENERATE FEEDBACK CONTROL VALUE f1 BASED ON INPUT TIME DIFFERENCE

**S11** — PERFORM TIME ADJUSTMENT BASED ON FEEDBACK CONTROL VALUE f1

$$\text{( END )}$$

## FIG. 6

EP 2 749 967 A1

**INTERNATIONAL SEARCH REPORT**

| International application No. |
| --- |
| PCT/JP2012/074834 |

A. CLASSIFICATION OF SUBJECT MATTER
*G04G5/00*(2006.01)i, *H04L7/00*(2006.01)i

According to International Patent Classification (IPC) or to both national classification and IPC

B. FIELDS SEARCHED

Minimum documentation searched (classification system followed by classification symbols)
G04G5/00, H04L7/00

Documentation searched other than minimum documentation to the extent that such documents are included in the fields searched
Jitsuyo Shinan Koho           1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2007-174680 A (Agilent Technologies Inc.), 05 July 2007 (05.07.2007), paragraphs [0001] to [0041]; fig. 1 to 4 & US 2007/0147562 A1    & EP 1802014 A1 & CN 101098219 A | 1-7 |
| A | JP 2007-174676 A (Agilent Technologies Inc.), 05 July 2007 (05.07.2007), paragraphs [0001] to [0028]; fig. 1, 2 & US 2007/0147435 A1    & EP 1802015 A1 & CN 001997027 A | 1-7 |
| A | JP 2010-197320 A (Sony Corp.), 09 September 2010 (09.09.2010), paragraphs [0001] to [0047]; fig. 1, 2, 8 to 10 & US 2010/0220748 A1    & CN 101820500 A | 1-7 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 October, 2012 (29.10.12) | 06 November, 2012 (06.11.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/074834

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2001-116865 A  (Toshiba Corp.), 27 April 2001 (27.04.2001), paragraphs [0028] to [0030] (Family: none) | 1-7 |

Form PCT/ISA/210 (continuation of second sheet) (July 2009)

**EP 2 749 967 A1**

**Patent documents cited in the description**

- JP 2010190635 A